# FASCICULE DE BREVET EUROPEEN

(11) **EP 2 445 161 B1**
(45) Date de publication et mention de la délivrance du brevet: **04.01.2017**
(21) Numéro de dépôt: 10306150.3
(22) Date de dépôt: 22.10.2010
(51) Int. Cl.: H04L 29/06, H04L 29/14

(54) **Plateforme pour traitement de requêtes de service composé d'un ensemble de noeuds avec réactivation contrôlée des sessions**
Plattform zur Bearbeitung von Dienstanfragen, die aus einer Menge von Knoten besteht, mit kontrollierter Reaktivierung von Sitzungen
Platform for processing service requests made up of a set of nodes with controlled session reactivation

(43) Date de publication de la demande: 25.04.2012
(73) Titulaire: ALCATEL LUCENT, 92100 Boulogne-Billancourt (FR)
(72) Inventeur: Tombroff, Dimitri, 91300 Massy (FR); Coste, Stephane, 91620, Nozay (FR)
(74) Mandataire: Berthier, Karine

(56) Documents cités:
- WO-A1-2007/064350
- US-A1- 2008 137 531

## Description

La présente invention est relative aux plateformes de traitement composées d'un ensemble connecté de noeuds de traitement. Ces plateformes permettent de distribuer une application et d'ainsi permettre une montée en charge. Ces applications peuvent par exemple être des applications de télécommunication consistant à traiter des requêtes de service selon des protocoles SIP (Session Initiation Protocol), HTTP (HyperText Transfer Protocol), Diameter, etc.

L'application peut nécessiter que la plateforme mémorise des données de session pour traiter les requêtes de service. Par exemple, une application « proxy SIP » peut nécessiter de conserver, pendant la durée de vie d'une session, des informations liées à cette session SIP afin de pouvoir traiter les messages SIP qui lui sont adressés par les différentes parties à l'appel.

Aussi, les noeuds de traitement possèdent des mémoires dans lesquelles sont stockées les données de session. Lorsqu'une requête de service arrive sur la plateforme, plusieurs stratégies sont alors possible : la rediriger vers le noeud qui possède les données de la session en question, ou bien au contraire la traiter localement en récupérant les données distantes...

Certaines applications nécessitent une continuité de service. C'est notamment le cas des applications de télécommunication afin d'éviter que des appels ou autres sessions de communication soient interrompues pour les clients. Pour ce faire, les données d'une même session sont généralement répliqués sur deux noeuds de traitement (voire davantage). Ainsi, en cas de panne (ou d'arrêt pour maintenance) d'un noeud, les données de la session sont toujours disponibles au sein de la plateforme et les requêtes de service liées à cette session peuvent continuer d'être traitées par la plateforme.

Lorsqu'un noeud devient ainsi indisponible, les sessions qu'ils contenaient doivent être activées sur d'autres noeuds, généralement ceux sur lesquels les données correspondantes ont été répliquées. Cette activation peut être extrêmement coûteuse car elle peut engendrer des traitements comme l'émission d'un message de réponse à un ou plusieurs parties de la session de communication, l'interrogation d'une base de données pour obtenir des informations complémentaires, des calculs à partir de ces informations complémentaires et/ou des données de session... Et elle peut en outre comprendre la réplication des données de session sur un nouveau noeud, afin de se prémunir d'une nouvelle défaillance.

Lorsque plusieurs milliers de sessions sont en jeu, la réactivation de celles-ci peut donc être très problématique. Les noeuds peuvent en effet être submergés par ces activations et plus à même de traiter les requêtes de service arrivant. Les performances de l'application peuvent être très diminuées.

On peut même aboutir au point que si aucune précaution n'est prise la réactivation d'un trop grand nombre de sessions sur un noeud peut bloquer ce noeud, voire provoquer un nouveau dysfonctionnement. Par effet boule de neige, c'est l'ensemble de la la plateforme qui peut tomber en panne par surcharge.

Toutefois, l'état de la technique est silencieux sur cette problématique des plateformes de traitement distribuées.

Dans le meilleur des cas, c'est par conséquent l'application elle-même qui doit prendre en charge cet aspect. Néanmoins, celle-ci n'a généralement pas connaissance de l'infrastructure sous-jacente et c'est même généralement un requis afin de rendre le développement des applications indépendant du déploiement.

Elle peut néanmoins répartir dans le temps les activations des sessions, par exemple x sessions par secondes. Mais le choix de ce taux x est délicat à déterminer : il ne doit pas être trop élevé pour, comme nous l'avons dit, ne pas surcharger la plateforme et l'application, mais pas trop faible non plus afin de minimiser le risque de ne pas pouvoir traiter une requête de service car sa session n'a pas encore été activée. Dans ce dernier cas, même, une réactivation trop lente d'une session peut pousser le client applicatif à envoyer un message de rafraichissement qui provoque une charge supplémentaire de traitement qui se surajoute à la charge de réactivation...

ce choix d'un bon rythme de réactivation par l'application n'est pas efficace car d'une part, l'application n'ayant pas connaissance de l'infrastructure, elle ne peut pas facilement déterminer ce taux qui, lui, dépend fortement de l'infrastructure, et d'autre part, cela induit un coût accru de production de l'application, tant du point de vue de la conception, que du développement et du test.

Le document WO 2007/064350 décrit un mécanisme de protection d'un cluster de serveurs par redondance et réplication des données.

L'invention a pour but d'améliorer la situation en proposant une plateforme de traitement qui permet de gérer au mieux la réactivation de session sur les noeuds, de façon indépendante de l'application.

L'invention a pour premier objet une plateforme pour le traitement de requêtes de service comportant un ensemble connecté de noeuds de traitement, chacun possédant une mémoire pour mémoriser des données de sessions et la plateforme possédant des moyens pour répliquer les données de chaque session sur au moins deux noeuds de traitement, et des moyens pour à la réception d'une requête de service, déterminer une session associée, et traiter la requête en fonction des données de la session. Certains au moins de ces noeuds possèdent :
- des moyens d'activation pour, en cas de détection d'un noeud défaillant, déterminer un ensemble de sessions dont les données étaient mémorisés dans la mémoire du noeud défaillant et répliquées dans sa propre mémoire, et activer les sessions de l'ensemble selon un rythme d'activation,
- et des moyens de mesure pour évaluer sa charge et déterminer ce rythme en fonction de l'évaluation de cette charge.

Selon un mode de réalisation de l'invention, les moyens de mesure sont prévus pour évaluer la charge de façon périodique, et les moyens d'activation activent les sessions en fonction de la dernière évaluation de charge.

L'évaluation de la charge peut être déterminée comme un temps de réponse global calculé à partir de temps de réponses d'un échantillon de traitements élémentaires.

Elle peut être déterminée de façon incrémentale à partir d'une évaluation précédente.

Les moyens d'activation peuvent en outre dupliquer les données des sessions de l'ensemble sur un autre noeud, distinct du noeud défaillant.

L'invention a également pour objet un procédé pour le traitement de requêtes de service par un ensemble connecté de noeuds de traitement, chacun possédant une mémoire pour mémoriser des données de sessions, procédé comportant une étape pour répliquer les données de chaque session sur au moins deux noeuds de traitement, une étape pour, à la réception d'une requête de service, déterminer une session associée, une étape de traitement de la requête en fonction des données de ladite session, et comportant en outre
- une étape d'activation pour, en cas de détection d'un noeud défaillant, déterminer un ensemble de sessions dont les données étaient mémorisés dans la mémoire du noeud défaillant et répliquées dans sa propre mémoire, et activer les sessions de l'ensemble selon un rythme d'activation,
- et une étape de mesure pour évaluer sa charge et déterminer le rythme en fonction de l'évaluation de la charge.

Selon un mode de réalisation de l'invention, les étapes d'activation et de mesure sont mises en oeuvre par certains au moins des noeuds de traitement.

L'étape de mesure peut consister à évaluer la charge de façon périodique, et l'étape d'activation peut consister à activer les sessions en fonction de la dernière évaluation de la charge.

L'évaluation de la charge est déterminée comme un temps de réponse global calculé à partir de temps de réponses d'un échantillon de traitements élémentaires.

L'évaluation de la charge peut être déterminée de façon incrémentale à partir d'une évaluation précédente.

Les moyens d'activation peuvent en outre dupliquer les données des sessions de l'ensemble sur un autre noeud, distinct du noeud défaillant.

Enfin l'invention a également pour objet un programme d'ordinateur comportant des moyens (c'est-à-dire du code logiciel) pour mettre en oeuvre un tel procédé.

L'invention, ses avantages et ses caractéristiques apparaîtront de façon plus claire dans la description qui va suivre en liaison avec la figure annexée.

Cette figure unique représente schématiquement une plateforme de traitement susceptible de mettre en oeuvre l'invention.

La plateforme P, représentée sur la figure, comporte un ensemble connecté de noeuds de traitement A, B, C, D, E. Ces noeuds peuvent former un réseau pair-à-pair qui peut être géré par différents algorithmes et mécanismes, tels CHORDS (référence à ajouter)

La plateforme peut également comporter un dispositif de distribution de charge LB (ou « *load* balancer » en anglais). Ce dispositif permet de répartir les requêtes de service R qui arrivent sur la plateforme P. Il peut pour se faire mettre en oeuvre différents mécanismes qui ne seront pas décrits ici.

Ce dispositif est tout à fait optionnel et certaines plateformes peuvent ne pas en posséder. Auquel cas, les requêtes de service R peuvent arriver sur n'importe quel noeud, en fonction de l'émetteur de la requête ou d'autres considérations architecturales.

L'invention peut s'appliquer à l'une ou l'autre de ces options, dans la mesure où elle ne concerne pas le dispositif de distribution de charge LB.

Les noeuds de traitement sont connectés de sorte qu'ils puissent s'échanger des messages.

Ces messages peuvent être des requêtes de service qui peuvent ainsi être acheminées jusqu'au noeud qui prendra en charge son traitement. Ce peuvent aussi être des messages à usage interne du réseau, leur permettant d'échanger des informations : activation d'une session sur un autre noeud ; copie de données de session ; recherche d'une session...

Le plus souvent, chaque noeud est identique : il s'agit d'instances distinctes d'un même module logiciel. Ils peuvent être déployés sur des équipements de traitement de l'information (ordinateurs, serveurs...) différents. Les noeuds ne se distinguent que par les données, et notamment les données de session qu'ils possèdent dans une mémoire qui leur sont associés.

La notion de session dépend de l'application. Dans le cas d'une application de télécommunication gérant un appel (au sens large), ces données de session représentent les données que l'application doit conserver tout au long de la session pour pouvoir traiter les requêtes de service appartenant à la session. Elles comprennent des données qui peuvent n'être présentent que dans une première requête mais pas dans les suivantes mais qui peuvent néanmoins être nécessaires pour les traiter. Elles comprennent aussi des données internes à l'application, par exemple son état. Il est en effet classique que les applications de télécommunication fonctionnent suivant le principe d'une machine à états et il est important que celles-ci conservent un identifiant de leur état afin de pouvoir traiter correctement les requêtes de service.

Afin de garantir la continuité de service, ces données de session sont dupliquées sur plusieurs noeuds de traitement, généralement deux. Différentes façons de faire sont possibles. Généralement, les noeuds eux-mêmes sont responsables de la duplication des données de session, afin d'éviter la création d'une fonction centrale (et d'ainsi pénaliser l'intérêt d'une structure entièrement répartie).

Lorsqu'une requête de service R arrive sur la plateforme P, elle est prie en charge par un premier noeud A. On suppose que cette requête de service R est associée à une session préalablement créée. Dans le cas contraire, une nouvelle session peut être créée.

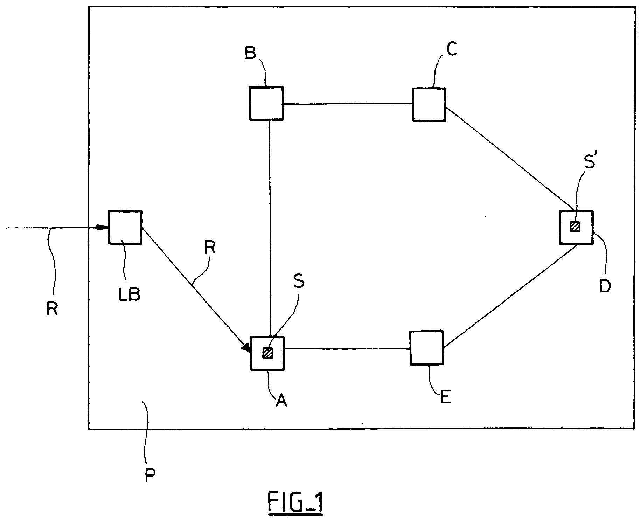

Dans l'exemple de la figure 1, le noeud de traitement A possède les données S de la session associée à la requête de service R. Cette situation peut arriver par hasard, parce que le client qui a émis la requête de service connaît le noeud A en question ou parce que le dispositif de répartition de charge LB conserve une vue des sessions au sein l'ensemble des noeuds A, B, C, D, E.

Si aucune disposition particulière n'est prise, il peut toutefois arriver que la requête de service R n'arrive pas sur le noeud A qui possède ses données de session. Différentes stratégies sont alors possibles. Il peut rediriger la requête vers le noeud qui possède les données de session, ou bien récupérer celles-ci afin de traiter lui-même la requête...

Les mécanismes et les stratégies utilisées et les moyens mis en oeuvre sont hors du cadre de la présente invention pour laquelle il importe juste que les requêtes de services puissent être traitées avec les données de la session associée.

Comme dit précédemment, ces données de session S sont dupliquées sur un autre noeud D (référence S') La plateforme P dispose de moyens pour détecter la défaillance d'un noeud et déclencher alors l'activation des sessions qui étaient gérées sur ce noeud défaillant sur d'autres noeuds. Ainsi, lors de la défaillance du noeud A, le noeud D qui possède la copie S' des données de session S peut être activé et, possédant les mêmes informations, gérer la session et les requêtes de service, dans les mêmes conditions que le noeud de traitement A.

Plus concrètement, certains au moins des noeuds possèdent des moyens d'activation pour, en cas de détection d'un noeud défaillant, déterminer un ensemble de sessions dont les données étaient mémorisés dans la mémoire du noeud défaillant et répliquées dans sa propre mémoire, et activer les sessions de cet ensemble.

L'activation peut impliquer différents types de traitement comme la recherche d'informations complémentaires dans une base de données qui peut être interne ou externe à la plateforme, le calcul à partir de ces informations complémentaires et/ou des données de session S', la duplication de ces données de session S' dans un nouveau noeud, l'échange de messages avec des clients parties à la session...

Par exemple, dans le cas d'une application de présence, l'activation peut comporter une étape d'interrogation d'une base de données afin d'obtenir les droits de la partie concernée, une liste des ses amis et relations (dite « *buddy-list* »), les règles s'appliquant à chacun d'entre eux. Elle peut comporter une étape de calcul des droits de la partie sur chacun de ses amis et relations. Elle peut comporter aussi l'envoi d'une notification à ces amis et relations.

Comme on a dit précédemment, cette activation peut en outre impliquer une nouvelle duplication des données de session. En effet, à ce moment-là, une seule copie S' des données de session existe puisque les données « principales » S ont été détruites lors de la défaillance du noeud A. Par conséquent, dans la phase d'activation, le noeud D doit dupliquer les données S' sur un noeud survivant B, C, E. Différents mécanismes pour le choix du noeud survivant existent, qui ne seront pas détaillés ici.

Les activations réalisées par un noeud sont effectuées selon un certain rythme qui est fonction de la charge du noeud. Pour ce faire, les noeuds disposent de moyens de mesure pour évaluer cette charge.

La charge est déterminée à partir du temps de réponse global du noeud. Ce temps de réponse global peut être calcul à partir d'un échantillon de temps de réponse.

Il est important de souligner qu'il s'agit des traitements élémentaires réalisés par le noeud au niveau du système d'exploitation et des moyens de traitement de la plateforme, et non au niveau applicatif.

Le traitement applicatif se basant sur ces traitements élémentaires, une mesure basée sur ces derniers donne une bonne indication de la charge du noeud et donc de la vitesse de traitement au niveau applicatif également.

Ces traitements élémentaires peuvent comprendre différents types de traitement. Idéalement même ils doivent en comprendre la plus grande variété possible afin que l'échantillon soit représentatif de la majorité des situations pouvant survenir.

Ces traitements élémentaires peuvent être des traitements internes ou bien des traitements externes. Un traitement interne est un traitement effectué par les moyens de traitement contenu dans l'élément de traitement en question (*thread*, process...) Un traitement externe peut impliquer des moyens de traitements externes : il peut s'agir d'un appel à une base de données, un serveur etc. Dans la mesure où l'élément de traitement doit attendre une réponse de ces moyens de traitement externes, ce temps de traitement externe est important pour évaluer la vitesse globale de traitement. Par exemple, si un accès à une base de données externe prend énormément de temps du fait de l'engorgement de cette base, cela doit être reflété dans le temps de réponse de la plateforme, même si ce ralentissement lui est extérieur.

Ces temps de réponse élémentaires peuvent donc représenter des traitements très divers : calculs réalisés par les moyens internes, échanges avec des outils externes, etc. Ils reflètent donc la charge des éléments de traitement mais aussi un engorgement d'un ou plusieurs dispositifs externes, un trafic trop important sur des connexions entre l'élément de traitement et un dispositif externe ou entre éléments de traitement etc.

L'invention ne se limite pas à un ou plusieurs de ces types de traitement ou de temps de traitement élémentaires et il est tout à fait possible d'adapter les temps de traitement élémentaires mesurées en fonction de l'application déployée sans pour autant sortir du cadre de l'invention. Au contraire, il s'agit là d'un avantage supplémentaire de l'invention que d'être indépendante des temps mesurées et de pouvoir être facilement adaptable.

L'échantillon pris en compte peut être constitué des temps de réponse élémentaire les plus récents. La contribution de chacun de ces temps de réponses peut diminuer en fonction de leur ancienneté.

Selon un mode de réalisation possible, lorsqu'un nouveau temps de réponse élémentaire X est disponible, une nouvelle valeur du temps de réponse D est calculée par la formule D=A×X + (1-A)xD dans laquelle A est un paramètre constant et X est une nouvelle mesure de temps élémentaire. Plus la constant A est proche de 1 et moins la temps de réponse D prend en compte l'historique des mesures. A doit être inférieur à 1 si le temps de réponse global D doit être lissé sur une fenêtre temporelle.

Cette formule est incrémentale. Il est utile d'avoir un mode de calcul de l'évaluation de la charge qui soit incrémental à partir d'une évaluation précédente car cela a pour avantage d'être efficace à mettre en oeuvre puisque cela ne nécessite pas que le noeud mémorise plusieurs valeurs ni de calculer une valeur moyenne à chaque nouveau temps de réponse élémentaire. Cela ajoute donc une surcharge minimale sur les noeuds.

Ce temps de réponse global forme donc une bonne évaluation de la charge du noeud.

Les moyens d'activation du noeud peuvent activer les sessions concernées selon un rythme d'activation déterminé en fonction de cette évaluation.

Par exemple, une nouvelle activation peut être déclenchée toutes les c/D ms. « c » étant une valeur constante, par exemple égale à 1 ms.

D'autres mises en oeuvre sont bien entendu possibles sans pour autant sortir du cadre de l'invention.

Il apparaît clairement qu'un des avantages est que le mécanisme de l'invention est géré par la plateforme elle-même et non par les applications. Le mécanisme est même totalement transparent pour les applications, ce qui présente de nombreux avantages ainsi que présentés dans l'article « Self-* through self-learning: Overload control for distributed web systems » de N. Bartolini, G. Bongiovann et S. Silvestri, paru dans Computer Networks en 2009 (pages 727-743).

## Revendications

1. Plateforme pour le traitement de requêtes de service comportant un ensemble connecté de noeuds de traitement, chacun possédant une mémoire pour mémoriser des données de sessions et la plateforme possédant des moyens pour répliquer les données de chaque session sur au moins deux noeuds de traitement, et des moyens pour à la réception d'une requête de service, déterminer une session associée, et traiter ladite requête en fonction des données de ladite session, certains au moins desdits noeuds possédant
- des moyens d'activation pour, en cas de détection d'un noeud défaillant, déterminer un ensemble de sessions dont les données étaient mémorisés dans la mémoire dudit noeud défaillant et répliquées dans sa propre mémoire, et activer les sessions dudit ensemble selon un rythme d'activation,
- et des moyens de mesure pour évaluer sa charge et déterminer ledit rythme en fonction de l'évaluation de ladite charge.

2. Plateforme selon la revendication précédente, dans laquelle lesdits moyens de mesure sont prévus pour évaluer ladite charge de façon périodique, et lesdits moyens d'activation activent lesdites sessions en fonction de la dernière évaluation de ladite charge.

3. Plateforme selon l'une des revendications précédentes dans lequel l'évaluation de ladite charge est déterminée comme un temps de réponse global calculé à partir de temps de réponses d'un échantillon de traitements élémentaires.

4. Plateforme selon l'une des revendications précédentes, dans lequel l'évaluation de la charge est déterminée de façon incrémentale à partir d'une évaluation précédente.

5. Plateforme selon l'une des revendications précédentes, dans lequel lesdits moyens d'activation dupliquent les données des sessions dudit ensemble sur un autre noeud, distinct dudit noeud défaillant.

6. Procédé pour le traitement de requêtes de service par un ensemble connecté de noeuds de traitement, chacun possédant une mémoire pour mémoriser des données de sessions, procédé comportant une étape pour répliquer les données de chaque session sur au moins deux noeuds de traitement, une étape pour, à la réception d'une requête de service, déterminer une session associée, une étape de traitement de ladite requête en fonction des données de ladite session, et comportant en outre
- une étape d'activation pour, en cas de détection d'un noeud défaillant, déterminer un ensemble de sessions dont les données étaient mémorisés dans la mémoire dudit noeud défaillant et répliquées dans sa propre mémoire, et activer les sessions dudit ensemble selon un rythme d'activation,
- et une étape de mesure pour évaluer sa charge et déterminer ledit rythme en fonction de l'évaluation de ladite charge.

7. Procédé selon la revendication précédente dans lequel lesdites étapes d'activation et de mesure sont mises en oeuvre par certains au moins desdits noeuds de traitement.

8. Procédé selon l'une des revendications 6 et 7, dans lequel ladite étape de mesure consiste à évaluer ladite charge de façon périodique, et ladite étape d'activation consiste à activer lesdites sessions en fonction de la dernière évaluation de ladite charge.

9. Procédé selon l'une des revendications 6 à 8, dans lequel l'évaluation de ladite charge est déterminée comme un temps de réponse global calculé à partir de temps de réponses d'un échantillon de traitements élémentaires.

10. Procédé selon l'une des revendications 6 à 9, dans lequel l'évaluation de la charge est déterminée de façon incrémentale à partir d'une évaluation précédente.

11. Procédé selon l'une des revendications 6 à 10, dans lequel lesdits moyens d'activation dupliquent les données des sessions dudit ensemble sur un autre noeud, distinct dudit noeud défaillant.

12. Programme d'ordinateur comportant des moyens pour mettre en oeuvre le procédé selon l'une des revendications 6 à 10.

## Patentansprüche

1. Plattform für die Verarbeitung von Dienstanforderungen aus einem Satz miteinander verbundener Verarbeitungsknoten, jeder von ihnen ausgestattet mit einem Speicher zum Speichern von Sitzungsdaten, wobei die Plattform Mittel für das Replizieren der Daten jeder Sitzung auf mindestens zwei Verarbeitungsknoten und weiterhin Mittel für den Empfang einer Dienstanforderung, das Bestimmen einer assoziierten Sitzung und das Verarbeiten besagter Anforderung in Funktion der Daten der besagten Sitzung umfasst, wobei mindestens einige besagter Knoten Folgendes umfassen:
- Aktivierungsmittel, um im Fall der Abschwächung eines Knotens einen Satz von Sitzungen zu bestimmen, deren Daten im Speicher des ausfallenden Knotens gespeichert und in dessen eigenem Speicher repliziert wurden, sowie um die Sitzungen besagten Satzes gemäß einem Aktivierungsrhythmus zu aktivieren,
- und Messmittel zum Ermitteln seiner Ladung und zum Bestimmen besagten Rhythmus in Funktion der Ermittlung der besagten Ladung.

2. Plattform nach vorgenanntem Anspruch, wobei besagte Messmittel ausgelegt sind, um besagte Ladung regelmäßig zu evaluieren, und wobei besagte Aktivierungsmittel besagte Sitzungen in Funktion der aktuellsten Evaluierung besagter Ladung aktivieren.

3. Plattform nach einem jeglichen der vorgenannten Ansprüche, wobei die Evaluierung besagter Ladung als allgemeine Antwortzeit bestimmt wird, die auf der Grundlage der Antwortzeit eines Abtastwerts für elementare Abtastvorgänge berechnet wird.

4. Plattform nach einem jeglichen der vorgenannten Ansprüche, wobei das Evaluieren der Ladung inkremental auf der Grundlage einer vorhergehenden Evaluierung erfolgt.

5. Plattform nach einem der vorgenannten Ansprüche, wobei besagte Aktivierungsmittel die Sitzungsdaten besagten Satzes auf einem anderen Knoten als dem ausfallenden Knoten duplizieren.

6. Verfahren für die Verarbeitung von Dienstanforderungen durch einen Satz miteinander verbundener Verarbeitungsknoten, jeder von ihnen ausgestattet mit einem Speicher zum Speichern von Sitzungsdaten, wobei das Verfahren eine Phase des Replizierens der Daten jeder Sitzung auf mindestens zwei Verarbeitungsknoten und weiterhin eine Phase für den Empfang einer Dienstanforderung, das Bestimmen einer assoziierten Sitzung und das Verarbeiten besagter Anforderung in Funktion der Daten der besagten Sitzung umfasst, unter anderem weiterhin umfassend:
- eine Aktivierungsphase, um im Fall der Abschwächung eines Knotens einen Satz von Sitzungen zu bestimmen, deren Daten im Speicher des ausfallenden Knotens gespeichert und in dessen eigenem Speicher repliziert wurden, sowie um die Sitzungen besagten Satzes gemäß einem Aktivierungsrhythmus zu aktivieren,
- und eine Messphase zum Ermitteln seiner Ladung und zum Bestimmen besagten Rhythmus in Funktion der Ermittlung der besagten Ladung.

7. Verfahren nach vorgenanntem Anspruch, wobei besagte Aktivierungs- und besagte Messphase zumindest von bestimmten der besagten Verarbeitungsknoten vorgenommen werden.

8. Verfahren nach einem der Ansprüche 6 und 7, wobei besagte Messphase im periodischen Evaluieren besagter Ladung besteht und wobei besagte Aktivierungsphase im Aktivieren besagter Sitzungen in Funktion der letzten Evaluierung besagter Ladung erfolgt.

9. Verfahren nach einem jeglichen der Ansprüche 6 bis 8, wobei die Evaluierung besagter Ladung als allgemeine Antwortzeit bestimmt wird, die auf der Grundlage der Antwortzeit eines Abtastwerts für elementare Abtastvorgänge berechnet wird.

10. Verfahren nach einem jeglichen der Ansprüche 6 bis 9, wobei das Evaluieren der Ladung inkremental auf der Grundlage einer vorhergehenden Evaluierung erfolgt.

11. Verfahren nach einem der Ansprüche, 6 bis 10, wobei besagte Aktivierungsmittel die Sitzungsdaten besagten Satzes auf einem anderen Knoten als dem ausfallenden Knoten duplizieren.

12. Computerprogramm mit Mitteln zur Implementierung des Verfahrens nach einem der Ansprüche 6 bis 10.

## Claims

1. A platform for processing service requests comprising a connected set of processing nodes, each one possessing a memory for saving session data, and the platform possessing means for replicating each session's data on at least two processing nodes, and means for, upon receipt of a service request, determining an associated session, and processing said request based on the data of said session, at least some of said nodes possessing
- activation means for, in case a faulty node is detected, determining a set of sessions whose data was saved in the memory of said faulty node and replicated in its own memory, and activating the sessions of said set at an activation pace,
- and measurement means for evaluating its load and determining said pace based on the evaluation of said load.

2. A platform according to the preceding claim, wherein said measurement means are provided to evaluate said load periodically, and said activation means activate said sessions based on the last evaluation of said load.

3. A platform according to one of the preceding claims, wherein the evaluation of said load is determined as a total response time calculated from the response times of a sample of elementary processes.

4. A platform according to one of the preceding claims, wherein the evaluation of the load is determined incrementally from a preceding evaluation.

5. A platform according to one of the preceding claims, wherein said activation means duplicate the session data of said set on another node, distinct from said faulty node.

6. A method for processing service requests comprising a connected set of processing nodes, each one possessing a memory for saving session data, which method comprises a step for replicating each session's data on at least two processing nodes, a step for, upon receipt of a service request, determining an associated session, and a step of processing said request based on the data of said session, and further comprising
- an activation step for, in case a faulty node is detected, determining a set of sessions whose data was saved in the memory of said faulty node and replicated in its own memory, and activating the sessions of said set at an activation pace,
- and a measurement step for evaluating its load and determining said pace based on the evaluation of said load.

7. A method according to the preceding claim, wherein said activation and measurement steps are implemented by at least some of said processing nodes.

8. A method according to one of the claims 6 and 7, wherein said measurement step consists of evaluating said load periodically, and said activation step consists of activating said sessions based on the latest evaluation of said load.

9. A method according to one of the claims 6 to 8, wherein the evaluation of said load is determined as a global response time calculated from the response times of a sample of elementary processes.

10. A method according to one of the claims 6 to 9, wherein the evaluation of the load is determined incrementally from a previous evaluation.

11. A method according to one of the claims 6 to 10, wherein said activation means duplicated session data of said set on another node, separate from said faulty node.

12. A computer program comprising means for implementing the method according to one of the claims 6 to 10.
